# EUROPEAN PATENT SPECIFICATION

(11) **EP 1 036 344 B1**
(45) Date of publication and mention of the grant of the patent: **20.08.2003**
(21) Application number: 98965191.4
(22) Date of filing: 27.11.1998
(51) Int. Cl.: G02B 6/00, G02B 6/44, B29C 47/02

(54) **PROCESS FOR THE MANUFACTURE OF AN OPTICAL CORE FOR A TELECOMMUNICATIONS CABLE**
HERTELLUNGSVERFAHREN FÜR DIE OPTISCHE SEELE EINES NACHRICHTENKABELS
PROCEDE DE PRODUCTION D'UNE AME OPTIQUE POUR CABLE DE TELECOMMUNICATION

(30) Priority: 04.12.1997 EP 97121295; 08.12.1997 US 67899 P
(43) Date of publication of application: 20.09.2000
(73) Proprietor: PIRELLI S.p.A., 20126 Milano (IT)
(72) Inventor: CECCHI, Feliciano, I-20010 Inveruno (IT); BRANDI, Giovanni, I-20131 Milano (IT)
(74) Representative: Giannesi, Pier Giovanni
(86) International application number: EP9807654
(87) International publication number: WO99030191

(56) References cited:
- EP-A- 0 543 379
- EP-A- 0 646 819
- GB-A- 2 113 903
- GB-A- 2 136 350
- GB-A- 2 176 905
- GB-A- 2 303 938
- US-A- 4 902 097

## Description

This invention relates to a process for the manufacture of an optical telecommunications cable.

More particularly, the invention as set forth in claim 1 relates to a process for the manufacture of an optical core for a telecommunications cable, wherein the optical core comprises a support consisting of a central, traction-resistant reinforcing member, a first polymeric coating layer applied around the central member, a plurality of optical fibres arranged around the first layer and a second polymeric coating layer extruded around the first layer and around the optical fibres.

Numerous processes are known for the manufacture of telecommunications cables comprising a core with optical fibres where the optical fibres, typically coated with one or more layers of acrylic resin, are completely encapsulated in thermoplastic materials.

A process is known, for example, from GB patent application 2,176,905 according to which optical fibres with acrylic coatings are forced through a die together with a central reinforcing member before being encapsulated in a thermoplastic casing of a material commercially designated "Hytrel®".

This process is known as a "one-shot operation", indicating that the core is formed in a single step in the extrusion die.

A method is described in GB patent no. 2,136,350 for constructing an optical core whereby a first central strength member is heated and a first thermoplastic elastomer layer is extruded on this member. A plurality of optical fibres is arranged in a helical pattern on the first layer with a planetary motion obtained from a
special revolving cage whereon drums containing the fibres are arranged. A second layer of thermoplastic material is extruded around the fibres. This method requires particularly complex equipment, consisting of a revolving cage with which rotating drums of fibres are associated and also guides for directing the fibres from the cage to the extrusion head.

GB patent no. 2,113,903 describes a method for making a telecommunications cable according to which a plurality of optical conductors is encapsulated at least partially in the outer periphery of a central matrix of thermoplastic material, polyethylene for example, extruded around a central steel or nylon filament member. More particularly, the conductors are forced against the central member which is softened by heat. The pressure on the conductors is such that a predetermined depositing thereof takes place in the matrix by which they are kept apart from each other before being coated with a further second extrusion layer.

US document no. 4,902,097 describes a method according to which a central reinforcing member is heated and provided with a first layer of thermoplastic elastomer. The support thus formed is heated and thereby softened to such an extent as to enable partial encapsulation therein of the optical fibres guided to the first layer through a plate with through-holes that the fibres pass through on their way to the extrusion head. A second layer of thermoplastic material is then extruded on the support and on the fibres.

GB 2,303,938 discloses a method for producing an optical cable by disposing a plurality of fibers on the surface of an inner polymeric layer and embedding them into an outer polymeric layer.

EP 646 819 discloses a method for reducing the PMD in fiber optic cable by imparting a controlled twist to the fiber being disposed around a coated strength member. During the manufacturing process, the strength member passes through a helically rotating closing die which applies radially inward forces on the cable core.

The applicant has observed that the production of optical cores according to the known methods may result in attenuation of the fibre transmission properties, due to the stresses that the fibres are subjected to during production of the optical core.

For example, with the so-called "one shot" process, it is difficult to control the relative positions of the fibres during extrusion of the polymeric layer and the fibres are subjected to undesired and uncontrolled stresses on account of the high level of pressure exerted by the polymeric material in the extrusion head.

The Applicant has also noted that partial encapsulation of the optical fibres in a first layer of thermoplastic material extruded around a central reinforcing member and subsequently covered with a second polymeric layer, as described in GB patent 2,113,903 or US patent 4,902,097, may be one of the causes of signal transmission attenuation in the fibres. In practical terms, it was seen that embedding fibres to a greater or lesser extent in a first thermoplastic layer, as described in the above patents to maintain the fibres in the desired configuration around the extrusion zone of the second layer, requires a certain mechanical compression action to be exerted on the fibres, which thus remain in the cable in a state of mechanical stress which, if high, results in attenuation of the signal. It was also observed that it is difficult to continuously keep this compression at a low level in view of the considerable lengths, running into kilometres, usually required in optical core manufacture.

The Applicant also noticed that, in the absence of a certain control over extrusion parameters, such as temperature of the molten polymer or dimension of the extruder, extrusion of the second polymeric layer onto the optical fibres arranged around the first coat may cause non-uniform distribution of pressure on the fibres, with the risk of moving the fibres from their desired configuration and of increasing attenuation of the signal when the transmission cable is in operation.

The Applicant has now found that a "tight" cable can be made simply and effectively, in which a plurality of optical fibres are encapsulated in a core of polymeric material consisting of at least two concentric and contiguous layers of polymer. This result may be conveniently obtained by arranging the fibres around a central support, so that they are free of the interface formed between the two contiguous polymeric layers and by controlling the extrusion parameters so that the geometric configuration of the fibres is maintained in a predetermined position.

Accordingly, the present invention concerns a process for the manufacture of an optical core for a telecommunications cable, comprising at least one central support coated with a first polymeric coating layer, a plurality of optical fibres arranged longitudinally around the support and a second polymeric coating layer extruded around said first layer and around said optical fibres, which comprises the following steps:
a) arranging said optical fibres longitudinally around said first polymeric coating layer so that the optical fibres are substantially tangential to the surface of the coating and circumferentially separated from each other in a predetermined way; and
b) extruding the second layer around said first layer and around said optical fibres, maintaining a condition of substantial tangency and of circumferential separation at least as far as the exit of the extruder, wherein the temperatures of said first and second layer are as defined in claim 1.

In the course of this description, the phrase "condition of substantial tangency of the fibres to the support" means a configuration wherein the fibres are placed in a position such that the interface between the two polymeric layers does not cross through the fibres. This condition generally includes both the case where the fibres are placed in substantial contact with the inner polymeric layer arranged around the central support, and the condition where the fibres are totally encapsulated in the second polymeric layer, thereby placing a thin layer of the second polymeric coat between the optical fibres and the first coating layer. This substantial tangency is typically obtained without applying any particular pressure on the fibres, either radially or longitudinally, to compress the fibres against the support or encapsulating them partially in it, as for example the mechanical type compression exerted by suitable equipment or compression obtained by winding the fibre helically under tension around the support. The expression is also used to mean that the fibre is in substantially tangential contact with the support substantially in each transversal section of the optical core.

In this description, the expression "condition of predetermined circumferential separation" means that the fibres are placed at the extruder entrance at a predetermined distance from each other around the circumference of the coated central support. The "maintenance of a condition of circumferential separation" at least as far as the extruder exit point means that in any case the fibres arranged longitudinally on the support must not be touching each other at the end of the extrusion process. Ideally the distance between the fibres at the end of the extrusion process will remain substantially the same as that set on entry of the fibres into the extruder. Ideally this predetermined distance is roughly the same between one fibre and the next.

According to a preferred embodiment, said extrusion head comprises a female die characterized in that it has a "land" with predetermined values for length "L" and diameter "D", such as to substantially maintain a condition of substantial tangency of the fibres to the support and of relative circumferential separation between the fibres as far as the point of exit from the zone of extrusion of the second polymeric layer. In particular, the "L/D" ratio values shall be between 1 and 2, and preferably between 1.3 and 1.5.

In this description, the term "land" of the female die is taken to mean the terminal portion of the extrusion head, typically of cylindrical shape, through which the extruded optical core is drawn.

According to a preferred aspect of this invention, said extrusion head comprises a male die characterized in that it comprises a plurality of suitable grooves arranged longitudinally along the inner wall of said male die so as to guide and maintain the optical fibres in the position of substantial tangency to the support. In particular, the grooves are arranged so that the maximum distance between two opposite grooves, close to the exit of the male die, substantially corresponds to the sum of the diameter of the support and twice the diameter of the fibres.

According to a further preferred aspect, the process is characterized in that the optical core is collected on a flywheel maintaining a ratio of the pull "K" on the support to the braking pull "k" on each fibre of between 10 and 50, the values of the said ratio being such that upon release of said pulls "K" and "k" the residual fibre elongation that must be compensated for before the fibres are subject to compression is at least about 0.02%, and preferably about 0.04%.

Again ideally the process is characterized in that the feed rate of the support is between 10 and 50 m/min.

With the above process it is possible to manufacuture an optical core comprising
- a central support coated with a first polymeric coating layer,
- a plurality of optical fibres arranged longitudinally around the support, and
- a second coating layer extruded around the support and around the optical fibres, an interface being defined between said first and said second polymeric layers, said optical fibres being free of the interface formed between the two polymeric layers and being arranged in an open configuration around the support.

The term "open configuration" is intended to mean typically that the fibres are arranged around the central support without a continuous type helical winding. For example, the fibres may be arranged substantially parallel to the longitudinal axis of the central support or in an open helix configuration, i.e. with inversion of the winding direction, also known as an "SZ" type helix. A parallel disposition of the fibres is generally preferred. Note that, in general, this definition includes configurations that involve absence of any substantial mechanical tightening of the fibres about the central support.

A clearer understanding of the present invention will be gained from the following example of an embodiment and the accompanying figures, where:
- figure 1 shows in transverse section an optical core of a state-of-the-art telecommunications cable;
- figure 2 illustrates in transverse section an optical core for a telecommunications cable according to this invention;
- figure 3 shows a longitudinal schematic view of a line for the manufacture of an optical core in accordance with the invention;
- figure 4 shows a front view of the disposition of the turning pulleys of the optical fibres of the core;
- figure 5 shows a schematic plan of the path of the optical fibres between the turning pulleys and the extruder of the second thermoplastic layer of the optical core;
- figure 6 shows a longitudinal section of the extruder of the second thermoplastic layer;
- figure 7 shows in longitudinal partial section an enlarged view of the element 23 of the male die of the extruder head, concerning the part through which the fibres and the support are guided before extrusion of the second thermoplastic layer; and
- figures 8 and 9 respectively depict the enlarged entrance and exit sections of the internal surface of the element 23 of the male die of figure 7.

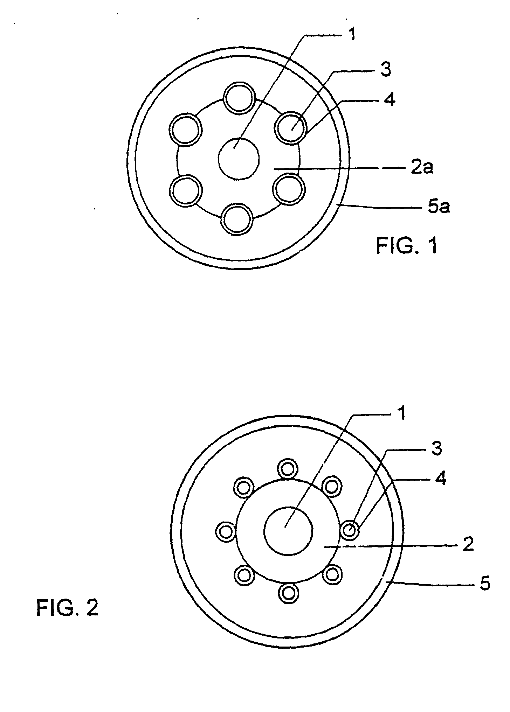

In figure 1, a known type optical core for a telecommunications cable, identified with the numeral 1, is depicted in transverse section.

The core comprises a central reinforcing member 1, for example a steel or similar wire, coated with a polymeric layer 2a. A plurality of optical fibres 3, each provided with its own acrylate coating layer 4 (in one or more layers), is partially encapsulated in the polymeric material 2a, as shown in figure 1.

Another polymeric layer 5a covers the first layer 2a and the optical fibres partially encapsulated in the said first layer.

Illustrated in transverse section in figure 2 is an optical core made according to the process of the invention. The optical core comprises a central support, typically a central reinforcing member 1, coated with a polymeric layer 2. The central reinforcing member may, for instance, be a wire of steel or resin reinforced with glass fibres, suitable reinforcing polymeric materials (such as aromatic polyamides, for example "kevlar"®), carbon fibres or the like. Examples of polymers suitable for coating the reinforcing member are thermoplastic resins. Preferably an elastomeric polyester is used, the one marketed under the trade name Hytrel® for example, particularly Hytrel® 4056 and G3548W (Du Pont).

A plurality of optical fibres 3, with their coating layers 4 (typically of acrylic resin, in one or more layers) are arranged longitudinally around the layer 2, in a condition of substantial tangency between inner support core 6 and fibres 3, and are completely encapsulated in a second polymeric layer 5, where the polymer constituting the second layer is selected from those listed in the foregoing, preferably being the same as that used for the coating 2.

The bending modulus (measured according to the ASTM D790 standard) of the material that the inner layer 2 and the outer layer 5 are made of is preferably between 30 and 70 MPa.

The optical core comprises optical fibres arranged substantially tangential to the transverse section of the core parallel to the cable axis, preferably numbering between 2 and 12, with the diameter of the fibres being between 240 and 270 µm.

The strength member consists of a steel wire with a diameter of between 0.5 and 0.7 mm, preferably of about 0.65 mm.

Preferably the thickness of the inner coating layer 2 is between 0.5 and 0.7 mm, giving an external diameter of the support 6 of between approximately 1.4 and 1.8 mm. According to a preferred embodiment, where 12 optical fibres are envisaged around the support 6, the polymeric coat is arranged around the strength member with a constant radial thickness, so that the diameter of the support 6 is roughly 1.7 mm.

The outer polymeric coat encapsulating the optical fibres is of radial thickness preferably between 0.4 and 0.8 mm, giving the optical core a final diameter of between 2.5 and 3 mm, preferably 2.75 mm.

The optical core may comprise further protective layers of a plastic material and/or in the form of thin metallic sheathes.

The core is surrounded by a sheath of thermoplastic material (not depicted) between 0.05 and 0.15 mm thick, for example 0.125 mm thick giving the core a total external diameter of 3.00 mm. The thermoplastic material is selected from those known in the art including, though the list is by no means exhaustive, PBT, PP, polyamides and polyethylenes.

One example of manufacture of the optical core comprises a first step in which the inner support core 6, consisting of the central reinforcing member 1 coated with the first polymeric layer 2 (for example, a thermoplastic elastomer, in particular Hytrel®), is made in known ways not depicted in the figures, for example by extruding the layer of polymeric material 2 around the support 1.

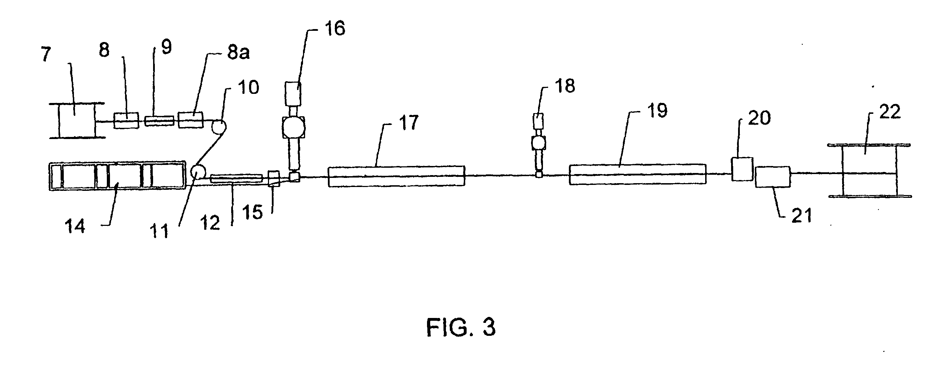

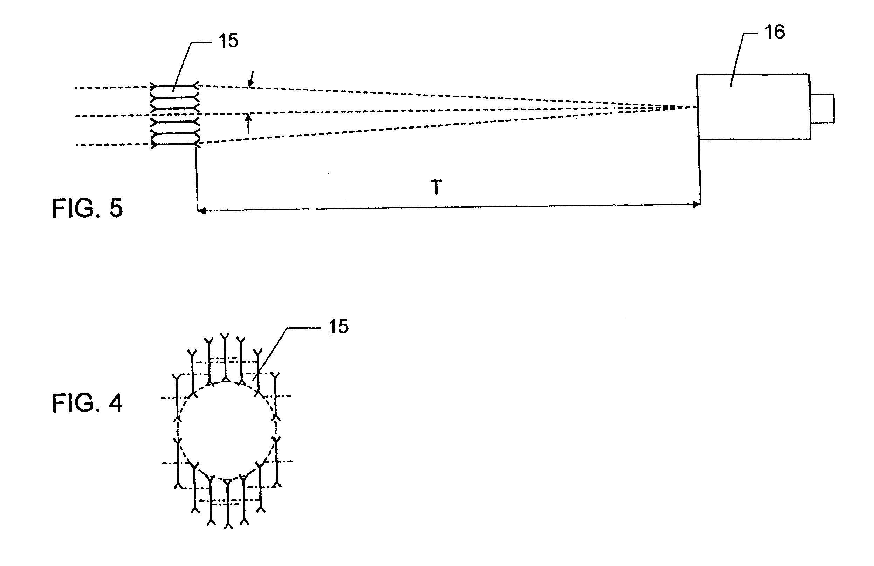

With reference to figure 3, a plan of the equipment for manufacture of the optical core comprises, in order, a drum 7 from which the central support 6 is unwound, one or more buffers 8, 8a and a braking member 9 for braking the support 6, one or more turning pulleys 10, 11 for conveying said support first through an infrared ray oven 12 for preheating, and then into the extruder 16. In parallel, the optical fibres 3 are unwound by optical fibre unwinding means 14 and conveyed into the extruder 16. A cooling tank 17 is placed at the exit of the extruder 16. According to a preferred embodiment, the optical core comprises 12 optical fibres guided into the extruder by appropriate pulleys 15. The pulleys, the disposition of which with respect to one another and to the longitudinal axis of the extruder is depicted in detail in figures 4 and 5, are suitably braked and disposed at a suitable distance from the longitudinal axis passing through the centre of the extruder 16, so as to guide the fibres to the entrance of the extrusion head at a suitable angle α with respect to the longitudinal axis, this angle α being less than 3°, preferably of about 1.5°. The distance "T" between the pulleys and the extruder may range from approximately 700 mm to approximately 1500 mm, being preferably approximately 1070 mm.

A further extruder 18 may optionally be placed after the cooling tank 17, for coating the optical core with a plastic sheath, with its own cooling tank 19 in turn placed after this extruder. Following the extruder and associated tank is a pulling member 20, followed by a buffer 21 and a collecting stand 22 for the finished optical core.

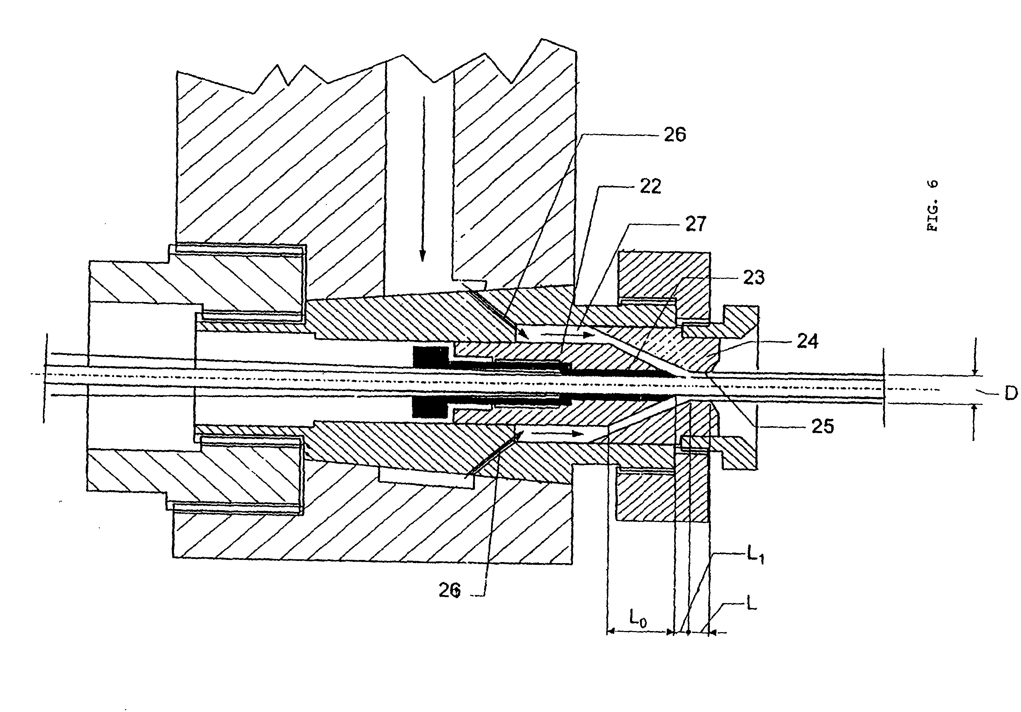

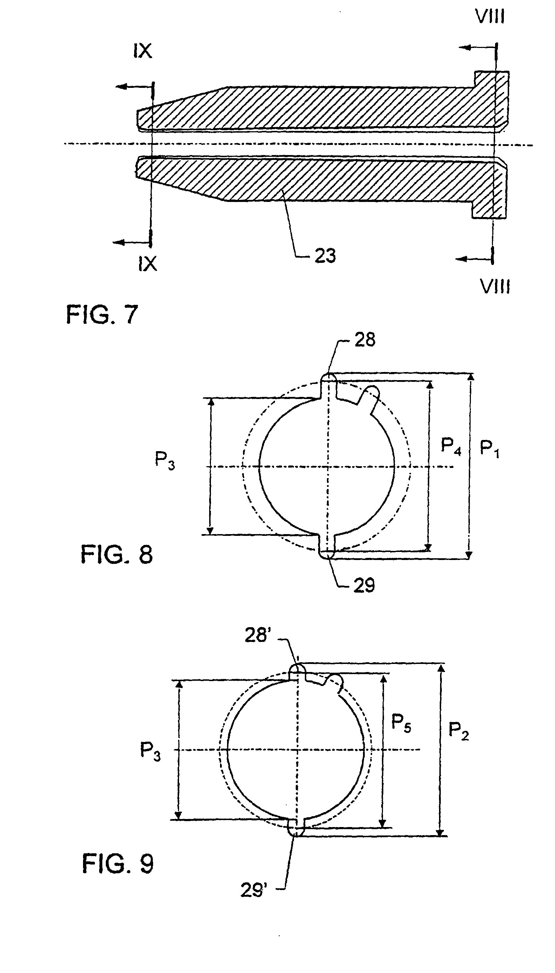

The extruder 16, illustrated in longitudinal schematic section in figure 6, comprises a male die 22 through which the support and optical fibres are to be forced and which includes the part 23 (illustrated in detail in figs. 7-9) adapted to arrange the fibres in the desired configuration around the central support, a female die 24, comprising the land 25, and one or more channels 26 through which the molten polymeric material is first conveyed to the zone 27 bounded by the above-mentioned two dies, and then applied to the support and the fibres as they exit from the cavity of the part 23 of the male die and on to the zone of the land 25.

Preferably, the inner cavity of the part 23 of the male die varies gradually, as depicted by the chain line in figure 7, being determined by the two values for the transverse sections of entrance and exit shown in the figures 8 and 9.

In greater detail, the inner cavity comprises a plurality of longitudinal grooves 28, 29, 28', 29' adapted for gradually guiding the optical fibres as they move through the extruder until they reach a position of substantial tangency between fibres and support at the exit of the male die. According to a preferred embodiment, the grooves are 12 in number.

In particular, the distance between the radially outermost walls of two diametrically opposite grooves 28, 29 has a first value "P₁" in the entrance section and a second value "P₂" less than the first, in the exit section, in relation to the grooves 28', 29'.

More specifically, the second value is predetermined so as to ensure that the optical fibres, at least at the exit of the structure, maintain a condition of substantial tangency to the support until the zone of extrusion of the second polymeric layer.

This condition is determined by the fact that the maximum distance "P₂" between the two diametrically opposite grooves 28' and 29' in the exit section of the tubular wall substantially corresponds to the sum of the external diameter of the support and twice the diameter of the fibres. In the case of a support having a diameter of 1.7 mm, and for fibres of diameter 0.25 mm, this distance will therefore be of about 2.2 mm.

The value "P₁" of the entrance section is fixed in relation to the length of the male die part 23 and to the angle α formed by the optical fibres with the longitudinal axis of the extruder, so as to maintain said angle α substantially constant in the inner cavity of the male die as well. For example, in the above case where the value of "P₂" is approximately 2.3 mm, for an angle α of approximately 1.5° and a male die of approximate length 10 mm, "P₁" will have a value of approximately 2.8 mm.

The land 25 of the female die is typically a cylinder characterized by given values for the ratio of the length "L" to the diameter "D", typically of between 1 and 2 to 1.

In accordance with the quoted "L/D" ratio values, the length values "L" are between 2 and 6 mm and the diameter values "D" between 2 and 4 mm.

Preferably, the "L/D" ratio is between approximately 1.3 and 1.5 mm, where the preferred value is approximately 1.38. The length "L" of the land is preferably between 3 and 5 mm, where particular preference is for a length of approximately 4 mm. The diameter "D" is preferably between 2.2 and 3.6 mm respectively, with a particular preference for a diameter of approximately 2.9 mm.

The length L₀ is approximately 100 mm and the distance L₁ between the extremity of the male die and the land of the female die is between 1 mm and 4 mm, and preferably 2 mm.

The diameter of the inner wall of the male die (P₃), with respect to which the grooves are radially oriented, is of the same value in the entrance and exit sections of figures 8 and 9, being slightly greater than the diameter of the support forced though it, typically 0.1 to 0.2 mm greater. For example, for a support having diameter 1.7 mm, a male die with an internal diameter of 1.8 mm will preferably be employed.

According to a preferred embodiment, the centres of the grooves of the entrance section are aligned on a circumference having a diameter P₄ of approximately 2.5 mm and the centres of the grooves of the exit section are aligned on a circumference having a diameter P₅ of approximately 2.0 mm.

The extrusion temperature of the second polymeric layer shall be such as not to negatively affect positioning of the optical fibres around the support. More specifically, the extrusion temperature shall be such as to ensure a sufficiently low viscosity of the polymer, to avoid the fibres being displaced from their relative positions, both in the axial direction and along the circumference. The extrusion temperature thus is adjusted to have a polymer with a viscosity of about 680 Pa·s or lower, measured at a shear rate of 100 sec⁻¹, preferably lower than about 500 Pa·s, a viscosity of about 400 Pa·s being particularly preferred. For example, if Hytrel 4056 is used for the coating polymer, to obtain a polymer of sufficiently low viscosity, the extrusion temperature (measured at the exit of the dies) shall be at least 220°C (viscosity of about 660 Pa·s; shear rate of 100 sec⁻¹), preferably at least about 240°C (viscosity of about 450 Pa·s), a temperature of about 250°C being particularly preferred (viscosity of about 370 Pa·s). Conversely, as excessive temperatures can cause decomposition of the material constituting the protective coating of the fibres, typically based on acrylates, the temperature is preferably maintained below 300°C, preferably below 280°C.

With reference to the figures, an example is described below of an embodiment of the optical core according to the invention, where an elastomeric polyester, more specifically Hytrel® (Du Font) is used as the thermoplastic material for both coating layers.

The support, in this case a steel wire coated with a first layer of polymeric material, is moved at a constant line speed, of preferably between 10 and 50 m/min, and is braked with a predetermined braking value, typically between 1 and 5 kg.

According to an especially preferred embodiment, the line speed is 14 m/min and the support braking value is 2.5 kg.

Initially the support is taken into the preheating oven 12, preferably of infrared type, regulated at a temperature of between 600 and 900°C, preferably 750°C approximately, so as to raise the support to a temperature of approximately 120-130°C. The temperature of this polymeric layer should be maintained at least 20°C, preferably at least about 30°C, below the melting temperature of the polymer. This allows to extrude the outer layer at a temperature sufficiently high to have the desired viscosity, without causing the melting of the inner layer and the consequent partial embedding of the fibers into said inner layer.

The preheated support is then fed to the centre of the unwinding means of the 12 pulleys bearing the optical fibres unwound by the traction they are subjected to and subject to a braking force, the values of which are correlated to those of the pull on the support and are between 50 and 250 g. To advantage, the ratio of the braking "K" on the support to the braking "k" on the fibres is between 10 and 50.

The "K/k" ratio values are conveniently predetermined so that, on release of the pull on the support and on the fibres, the residual elongation of the optical fibres that must be compensated for before they are subject to compression is at least equal to approximately 0.02%.

The fibres and the support are fed inside the male die 22 towards the zone of the land 25 where the second layer of polymeric material is extruded. The optical fibres are suitably guided in the tubular wall of the part 23 by the longitudinal grooves 28, 29 (figs. 7-9) forming radial containing surfaces for the fibres so that they first gradually approach the support and then assume thereupon the condition of substantial tangency at least until the male die exit point (fig. 9) through the grooves 28', 29'.

The optical fibres exit from the male die 22 in the position of substantial tangency to the support and with the reciprocal circumferential separation configuration imposed by the longitudinal grooves, and move with the support to the land 25 of the female die 24, where they are coated with the second polymeric layer coming from the channel 27. The land 25 of the female die is characterized by the length and diameter values seen earlier.

Preferably, the temperature of the second polymeric layer, measured at the outlet of the dies, is between 220°C and 280°C, where the particularly preferred temperature is between 240°C and 260°C, the most preferred temperature being 250°C.

At the extruder exit, in the case where the second polymeric layer is the last part of the optical core, the support with the fibres encapsulated in the polymeric layer moves into the cooling tank and then on to the collecting stage.

The core 6 is cooled in water at a predetermined temperature in the tank 11. In particular, the Applicant has seen that, to maintain the optical fibres substantially tangential to the support, as desired, it is advantageous to cool the core to a temperature between 20 and 80°C, and preferably between 40°C and 60°C.

Where coating of the optical core with a further coating layer is envisaged, the support with the optical fibres encapsulated in the second layer moves through another extruder where it is coated with a thermoplastic sheath, of a polyamide resin for example.

The optical core, completed with the thermoplastic sheath, is then cooled in the tank as already seen.

Finally the resulting core moves, by way of the pulling member 20, through the buffer 21 and is gathered on the collecting stand 22.

Using the method described above, two optical cores were made, altering the length "L" of the land 25 of the female die, and keeping the other parameters constant.

In particular, for both of the optical cores of the example, the following materials were used:
- central reinforcing member: steel, diameter 0.65 mm;
- first coating layer: Hytrel® 4056, thickness 0.525 mm;
- 12 optical fibres (diameter 240 µm) coated with acrylic resin;
- second coating layer: Hytrel® 4056, thickness 0.525 mm.

For the extrusion a Bandera® 30 extruder was used with an extrusion head characterized by the following parameters:
- diameter P₁ at the male die entrance: 2.8 mm
- diameter P₂ at the male die exit: 2.3 mm
- length L₀ of the male die: 100 mm
- distance L₁ between male die and land of female die: 2 mm
- diameter of land of female die: 2.9 mm
- length L of land: 1 mm or 4 mm (see table)

The parameters of the extrusion line were as follows:
- line speed: 14 m/min;
- braking of optical fibres: 100 g;
- braking of support: 2.5 or 6.0 kg (see table).

The extrusion temperature for the second layer of Hytrel® was set at 230°C.

The cooling tank was at about 150 mm from the extruder and temperature of the water was approximately 50°C or 80°C (see table).

Performance was verified under thermal cycles ranging between maximum and minimum values of respectively +60°C and -30°C, simulating the extreme temperature values that the cable may be subjected to in its lifetime, as for example, during storage in the factory, loading, shipping, and laying in accordance with the following method:
- the optical core, of minimum length 3 km, is wound on a drum and put in a climate chamber with forced air circulation;
- the desired temperature is set, ensuring that the temperature heat conditions are reached by measuring the resistance in direct current of the central member (until the resistance value measured becomes constant);
- once the desired temperature has been reached, the optical core is left under these conditions for a minimum of 24 h;
- attenuation of the signal transmitted by the fibre is assessed by measuring the backscattering with OTDR at a wavelength of 1550 nm; the measurements are made at both ends of the fibre, and the attenuation taken as the average of the two measurements;
- the thermal cycle requires 6 measurements of attenuation, respectively at 60°C, 0°C, -20°C, -30°C, 60°C and 20°C.

The results are shown in the table below:

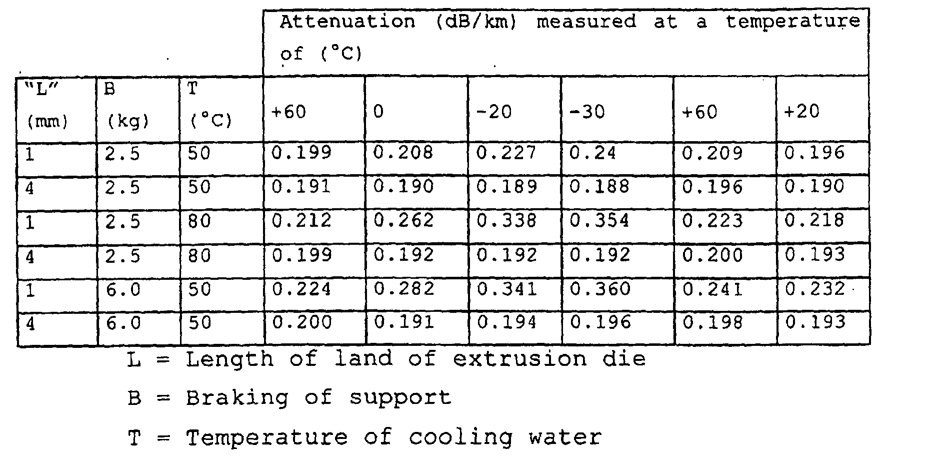

The results shown in the table illustrate an improvement in the attenuation values obtainable in the optical fibres of the optical core when using an extrusion head for the second layer of Hytrel® having a land length "L" of 4 mm as against the attenuation values obtainable with the 1 mm value, all other dimensions of the extrusion head remaining equal.

More particularly, it should be observed that the average attenuation value measured for the fibres in cores according to the invention is in any case always less than or equal to 0.200 dB/km. Furthermore, the difference between the maximum and minimum average values measured during the thermal cycle is less than 0.01 dB/km.

As observed by the Applicant, the process according to the invention enables minimization of the mechanical pressures produced on the fibres during manufacture of the optical core. The advantage of this is that the substantial absence of external mechanical pressures exerted on the optical fibres, and control of the pressure of the polymeric material flowing in plastic form through the extrusion head, automatically means that the characteristics of the optical fibres will be upheld and that, as a result, there will be a reduction of the causes normally liable to produce attenuation of the optical signal transmitted by the fibres.

More particularly, as observed by the Applicant, the condition of substantial tangency is advantageously obtained by guiding the fibres in special grooves and maintaining the condition of substantial tangency during extrusion of the second polymeric layer, thereby also avoiding substantial displacements of the fibres around the support. It was observed in particular that this condition may be achieved using a suitable value for the ratio of axial length "L" of the land of the female die to its diameter "D", preferably also adopting a given extrusion temperature value.

For example, excessively high values for the "L/D" ratio (due for instance to land lengths that are too long in relation to the diameter) can increase pressure of the polymeric material inside the extrusion head to such an extent that the fibres are moved from the desired configuration of tangency and of separation around the circumference. On the other hand, too low an extrusion temperature can also result in this drawback, on account of excessive viscosity of the polymer. It was also observed that if the "L/D" ratio is too low (for instance, due to insufficient lengths relative to the diameter), only partial or non-uniform coating of the optical fibres may result, typically on account of too rapid a variation in the pressure of the polymeric material moving out of the extrusion head and into the surrounding environment.

The Applicant has also observed that setting the temperature of the cooling tank at a value of at least 20 °C also helps maintain the required degree of coating on the fibres. The reason for this is that keeping the cooling water temperature above this value avoids potential over-cooling of the outermost part of the core compared with the innermost part, with resultant contraction of the external part.

In a situation such as this, it may happen that the plastic material disposed around the optical fibres is drawn outwardly to compensate for the volume of material missing following contraction of the external part. This produces a consequent displacement of the optical fibres from their orderly geometrical configuration, which may result in localized excesses of pressure on the fibres and consequent attenuation of the signal transmitted by the fibre.

The present invention is not strictly limited to what has been described in the foregoing but also includes all those solutions and construction alternatives which, fall under the scope of the attached claims.

For example, the optical fibres could be applied to the support in an "SZ" type configuration instead of parallel to the longitudinal central axis of the core.

According to a possible variant of the process according to the invention, the "SZ" configuration may be produced by alternate rotations of the fibres by using a male die rotating in opposite directions, or again for example by causing oscillations of the central wire before the extrusion head.

An optical core made according to the invention may be part of, for example, an underwater telecommunications cable further comprising the following elements:
- a tensile stress resistant reinforcing element, typically comprising one or more rings of steel wires;
- a watertight sheath soldered longitudinally (of copper, for example), optionally acting as an electrical conductor in the case of cables for repeater or amplifier systems;
- padding on the optical module and between the reinforcing wires to avoid longitudinal penetration of water, using substances of suitable viscosity, preferably expanding with humidity and accepting hydrogen;
- an outer insulating sheath, of polyethylene for example;
- where necessary, depending on the depth the cable is laid at, a protective armouring.

The optical core may be used to advantage in other cable structure applications, such as for example terrestrial cables, safety ropes and similar, in combination with the specific reinforcing and/or functional elements envisaged for each application.

## Claims

1. Process for the manufacture of an optical core for a telecommunications cable, comprising at least one central support with a first polymeric coating layer, a plurality of optical fibres arranged longitudinally around the support and a second polymeric coating layer extruded around said first polymeric layer and around said optical fibres, which comprises the steps of:
a) arranging said optical fibres longitudinally around said first polymeric coating layer so that the optical fibres are substantially tangential to the surface of said coating and circumferentially separated from each other in a predetermined way; and
b) extruding the second polymeric layer around said first layer and around said optical fibres, maintaining a condition of substantial tangency and circumferential separation at least as far as the exit of the extruder,
wherein the temperature of the first polymeric layer is kept at least 30°C below the melting temperature of the polymer before extruding the second polymeric layer on it, and said second layer is extruded at a temperature at which said polymer has a viscosity of about 680 Pa·s or lower, measured at a shear rate of 100 sec⁻¹.

2. Process according to claim 1 wherein said second layer is extruded at a temperature at which said polymer has a viscosity lower than about 500 Pa·s.

3. Process according to claim 1 wherein said second layer is extruded at a temperature at which said polymer has a viscosity of about 400 Pa·s.

4. Process according to claim 1 wherein said temperature of said second layer is at least 220°C or higher.

5. Process according to claim 1 wherein said temperature of said second layer is from 220°C to 280°C.

6. Process according to Claim 1 where said extruder comprises a female die **characterized in that** it has a "land" with predetermined values for length "L" and diameter "D", such as to substantially maintain a condition of substantial tangency between the fibres and the support and of relative circumferential separation as far as the exit from the zone of extrusion of the second polymeric layer.

7. Process according to Claim 6 **characterized in that** the "L/D" ratio values are between 1 and 2.

8. Process according to Claim 6 **characterized in that** the "L/D" ratio values are between 1.3 and 1.5.

9. Process according to Claim 7 **characterized in that** the length "L" of the land is between 2 and 6 mm and the diameter "D" is between 2 and 4 mm.

10. Process according to Claim 7 **characterized in that** the length "L" of the land is between 3 and 5 mm and the diameter "D" is between 2.2 and 3.6 mm.

11. Process according to Claim 2 where said extruder head comprises a male die **characterized in that** it comprises a plurality of grooves suitably arranged longitudinally along the inner wall of said male die so as to guide and maintain the optical fibres in the position of substantial tangency to the support.

12. Process according to Claim 11 where the grooves are arranged so that the maximum distance between two opposite grooves, close to the exit of the male die, substantially corresponds to the sum of the diameter of the support and of twice the diameter of the fibres

13. Process according to any one of the preceding claims **characterized in that** the optical core is cooled after extrusion in a cooling tank containing water at a temperature between approximately 20°C and approximately 80°C.

14. Process according to any one of the preceding claims, **characterized in that** the optical core is collected on a flywheel maintaining a ratio of the pull "K" on the support to the braking pull "k" on each fibre of between 10 and 50, the values of the said ratio being such that upon release of said pulls "K" and "k" the residual fibre elongation that must be compensated for before the fibres are subject to compression is at least about 0.02%.

15. Process according to any one of the preceding claims **characterized in that** the feed rate of the support is between 10 and 50 m/min.

## Patentansprüche

1. Verfahren zur Herstellung eines optischen Kerns für ein Telekommunikationskabel, umfassend mindestens einen zentralen Träger mit einer ersten polymerischen Beschichtungslage, eine Mehrzahl optischer Fasern, die längs um den Träger angeordnet sind, und eine zweite polymerische Beschichtungslage, die um die erste polymerische Beschichtungslage und um die optischen Fasern herum extrudiert ist, welches die Schritte aufweist:
a) Anordnen der optischen Fasern längs um die erste polymerische Beschichtungslage, so dass die optischen Fasern im wesentlichen tangential zu der Oberfläche der ersten Beschichtung und in Umfangsrichtung von einander getrennt auf vorbestimmte Weise sind; und
b) Extrudieren der zweiten polymerischen Lage um die erste Lage und um die optischen Fasern, Aufrechterhalten eines Zustands im wesentlichen von Tangentialität und Trennung in Umfangsrichtung zumindest bis zum Ausgang des Extruders,
worin die Temperatur der ersten polymerischen Lage auf mindestens 30° C unterhalb der Schmelztemperatur des Polymers gehalten wird, bevor die zweite polymerische Lage auf diese extrudiert wird, und die zweite Lage wird bei einer Temperatur extrudiert, bei der das Polymer eine Viskosität von etwa 680 Pa · s oder niedriger besitzt, gemessen bei einer Schubrate von 100 sec⁻¹.

2. Verfahren nach Anspruch 1, worin die zweite Lage bei einer Temperatur extrudiert wird, bei der das Polymer eine Viskosität von weniger als etwa 500 Pa · s besitzt.

3. Verfahren nach Anspruch 1, worin die zweite Lage bei einer Temperatur extrudiert wird, bei der das Polymer eine Viskosität von etwa 400 Pa · s besitzt.

4. Verfahren nach Anspruch 1, worin die Temperatur der zweiten Lage mindestens 220° C oder höher ist.

5. Verfahren nach Anspruch 1, worin die Temperatur der zweiten Lage im Bereich von 220° C bis 280° C liegt.

6. Verfahren nach Anspruch 1, worin der Extruder ein weibliches Mundstück aufweist, **dadurch gekennzeichnet, dass** es einen "Landabschnitt" mit vorbestimmten Werten für eine Länge "L" und einen Durchmesser "D" derart besitzt, um einen Zustand in wesentlichen von Tangentialität zwischen den Fasern und den Träger und relativer Trennung in Umfangsrichtung bis zum Ausgang der Extrusionszone der zweiten polymerischen Lage aufrecht zu erhalten.

7. Verfahren nach Anspruch 6, **dadurch gekennzeichnet, dass** die "L/D"-Verhältniswerte zwischen 1 und 2 sind.

8. Verfahren nach Anspruch 6, **dadurch gekennzeichnet, dass** die "L/D"-Verhältniswerte zwischen 1,3 und 1,5 sind.

9. Verfahren nach Anspruch 7, **dadurch gekennzeichnet, dass** die Länge "L" des Landabschnitts zwischen 2 und 6 mm ist und dass der Durchmesser "D" zwischen 2 und 4 mm ist.

10. Verfahren nach Anspruch 7, **dadurch gekennzeichnet, dass** die Länge "L" des Landabschnitts zwischen 3 und 5 mm ist und der Durchmesser "D" zwischen 2,2 und 3,6 mm ist.

11. Verfahren nach Anspruch 2, wobei der Extruder ein männliches Mundstück aufweist, **dadurch gekennzeichnet, dass** es eine Mehrzahl von Nuten aufweist, die in geeigneter Weise längs entlang der inneren Wand des männlichen Mundstücks derart angeordnet sind, um die optischen Fasern in der Position in wesentlichen von Tangentialität zu dem Kern zu führen und zu halten.

12. Verfahren nach Anspruch 11, wobei die Nuten derart angeordnet sind, dass der maximale Abstand zwischen zwei gegenüberliegenden Nuten, nahe zu dem Ausgang des männlichen Mundstücks, im wesentlichen der Summe des Durchmessers des Trägers und des zweifachen Durchmessers der Fasern entspricht.

13. Verfahren nach einem der vorhergehenden Ansprüche, **dadurch gekennzeichnet, dass** der optische Kern nach der Extrusion in einem Kühlbehälter gekühlt wird, der Wasser bei einer Temperatur zwischen näherungsweise 20° C und näherungsweise 80° C enthält.

14. Verfahren nach einem der vorhergehenden Ansprüche, **dadurch gekennzeichnet, dass** der optische Kern auf einem Schwungrad gesammelt wird, der ein Verhältnis des Zuges "K" auf den Träger zu den Bremszug "k" auf jede Faser von zwischen 10 und 50 aufrecht erhält, wobei die Werte dieses Verhältnisses derart sind, dass beim Lösen der Züge "K" und "k" die Restfaserdehnung, die ausgeglichen werden muss, bevor die Fasern einer Kompression unterworfen werden, mindestens etwa 0,02% beträgt.

15. Verfahren nach einem der vorhergehenden Ansprüche, **dadurch gekennzeichnet, dass** die Förderrate des Trägers zwischen 10 und 50 m/min ist.

## Revendications

1. Procédé de fabrication d'une âme optique pour câble de télécommunication, comprenant au moins un support central avec une première couche de revêtement à base de polymères, une pluralité de fibres optiques agencées longitudinalement autour du support et une deuxième couche de revêtement à base de polymères extrudée autour de ladite première couche de polymère et autour desdites fibres optiques, qui comprend les étapes consistant à :
a) placer lesdites fibres optiques longitudinalement autour de ladite première couche de revêtement en polymère de telle manière que les fibres optiques sont sensiblement tangentielles à la surface dudit revêtement et circonférentiellement séparées les unes des autres d'une manière prédéfinie ; et
b) extruder la deuxième couche de polymère autour de ladite première couche et autour desdites fibres optiques, en maintenant une condition de tangence substantielle et de séparation circonférentielle au moins jusqu'à la sortie de l'extrudeuse,
dans lequel la température de la première couche de polymère est maintenue au moins 30 °C sous la température de fusion du polymère avant d'extruder la deuxième couche de polymère dessus, et ladite deuxième couche est extrudée à une température à laquelle ledit polymère a une viscosité inférieure ou égale à environ 680 Pa.s, mesurée à une vitesse de rupture de 100 s⁻¹.

2. Procédé selon la revendication 1, dans lequel ladite deuxième couche est extrudée à une température à laquelle ledit polymère a une viscosité inférieure à environ 500 Pa.s.

3. Procédé selon la revendication 1, dans lequel ladite deuxième couche est extrudée à une température à laquelle ledit polymère a une viscosité d'environ 400 Pa.s.

4. Procédé selon la revendication 1, dans lequel ladite température de ladite deuxième couche est supérieure ou égale à 220 °C.

5. Procédé selon la revendication 1, dans lequel ladite température de ladite deuxième couche est comprise entre 220 °C et 280 °C.

6. Procédé selon la revendication 1, dans lequel ladite extrudeuse comprend une filière femelle **caractérisée en ce qu'**elle comporte une "zone" ayant des valeurs prédéfinies pour la longueur "L" et le diamètre "D", de manière à maintenir substantiellement une condition de tangence substantielle entre les fibres et le support et de séparation circonférentielle relative jusqu'à la sortie de la zone d'extrusion de la deuxième couche de polymère.

7. Procédé selon la revendication 6, **caractérisé en ce que** les valeurs de rapport "L/D" sont comprises entre 1 et 2.

8. Procédé selon la revendication 6, **caractérisé en ce que** les valeurs de rapport "L/D" sont comprises entre 1,3 et 1,5.

9. Procédé selon la revendication 7, **caractérisé en ce que** la longueur "L" de la zone est comprise entre 2 et 6 mm et le diamètre "D" est compris entre 2 et 4 mm.

10. Procédé selon la revendication 7, **caractérisé en ce que** la longueur "L" de la zone est comprise entre 3 et 5 mm et le diamètre "D" est compris entre 2,2 et 3,6 mm.

11. Procédé selon la revendication 2, dans lequel ladite extrudeuse comprend une filière mâle **caractérisée en ce qu'**elle comprend une pluralité de rainures placées de manière appropriée longitudinalement le long de la paroi intérieure de ladite filière mâle de manière à guider et maintenir les fibres optiques dans la position de tangence substantielle au support.

12. Procédé selon la revendication 11, dans lequel les rainures sont agencées de telle manière que la distance maximale entre deux rainures opposées, près de la sortie de la filière mâle, correspond substantiellement à la somme du diamètre du support et de deux fois le diamètre des fibres.

13. Procédé selon l'une quelconque des revendications précédentes, **caractérisé en ce que** l'âme optique est refroidie après extrusion dans une cuve de refroidissement contenant de l'eau à une température comprise entre environ 20 °C et environ 80 °C.

14. Procédé selon l'une quelconque des revendications précédentes, **caractérisé en ce que** l'âme optique est recueillie sur un volant maintenant un rapport de la traction "K" sur le support à la traction de freinage "k" sur chaque fibre compris entre 10 et 50, les valeurs dudit rapport étant telles que lors du relâchement desdites tractions "K" et "k" l'allongement résiduel des fibres qui doit être compensé avant que les fibres soient soumises à la compression vaut au moins environ 0,02 %.

15. Procédé selon l'une quelconque des revendications précédentes, **caractérisé en ce que** la vitesse d'alimentation du support est comprise entre 10 et 50 m/min.
